# EUROPÄISCHE PATENTSCHRIFT

(11) **EP 2 796 293 B1**
(45) Veröffentlichungstag und Bekanntmachung des Hinweises auf die Patenterteilung: **03.08.2016**
(21) Anmeldenummer: 14000939.0
(22) Anmeldetag: 14.03.2014
(51) Int. Cl.: B32B 38/18, B65H 39/16, B29C 63/02

(54) **Verfahren und Vorrichtung zum exakten Legen von Beschichtungsmaterial auf einer in einer Presse zu beschichtenden Trägerplatte**
Method and device for the precise placement of coating material on a support plate in a press
Procédé et dispositif de dépôt exact d'un matériau de revêtement sur une plaque de support dans une presse

(30) Priorität: 25.04.2013 DE 102013104209
(43) Veröffentlichungstag der Anmeldung: 29.10.2014
(73) Patentinhaber: Wemhöner Surface Technologies GmbH & Co. KG, 32052 Herford (DE)
(72) Erfinder: Dammermann, Uwe, 32479 Hille (DE); Hageböke, Frank, 32339 Espelkamp (DE)
(74) Vertreter: Rolf, Gudrun, LL.M

(56) Entgegenhaltungen:
- WO-A1-96/21904
- DE-A1-102006 025 504
- DE-A1-102010 012 571
- DE-B4- 10 146 304

## Beschreibung

Die Erfindung betrifft ein Verfahren und eine Vorrichtung zum exakten Legen von oberem und unterem, mit Dekor versehenem, einzelblattförmigem Beschichtungsmaterial auf zu beschichtenden Trägerplatten, wobei diese Werkstückstapel in einer nachfolgenden Presse mittels dem Dekor abgepassten oberflächenstrukturierten Pressblechen gleichzeitig druck- und prägekonform miteinander verpresst werden.

Ein Verfahren und eine Vorrichtung zum exakten Legen von Beschichtungsmaterial auf in einer Presse zu beschichtenden Trägerplatten ist bekannt, DE 101 46 304 B4, bei denen nur das obere Beschichtungsmaterial von einem Kamerasystem A detektiert und optimal ausgerichtet auf einer Trägerplatte abgelegt wird, um so ein dekorkonformes Prägen der Oberseite des Werkstückes in der nachfolgenden Presse zu gewährleisten.

Nachteilig an diesem vorbekannten Verfahren und an der bekannten Vorrichtung ist, dass sich ein gleichzeitiges beidseitig dekorkonformes Prägen nicht sicher durchführen lässt, da die Lage des unteren Beschichtungsmaterials bzw. dessen Dekor nur bedingt deckungsgleich bzw. lagerichtig zum Dekor des Beschichtungsmaterials der Oberseite unter der Trägerplatte positioniert werden kann. Ein nur kantenbezogenes Ausrichten des unteren Beschichtungsmaterials führt auf Grund der Toleranzen zwischen Filmkante und Dekor zu keinem deckungsgleichen Aufbau der Dekore.

Bekannt ist des Weiteren ein Verfahren und eine Vorrichtung zum rapportgenauen Positionieren von mindestens zwei sich übereinander bewegenden und zusammenzuschweißenden Bahnen aus bedruckten Kunststofffolien, DE 10 2010 012 571 A1, auf deren freien Oberflächen beidseitig zwischen voneinander beabstandeten Umlenkrollen optische Sensoren Druckmarkierungen detektieren, wobei deren Lage zur Lage nachfolgender Bearbeitungsschritte vollkommen unberücksichtigt bleibt.

Aufgabe der Erfindung ist es, ein Verfahren und eine Vorrichtung zum exakten Legen von oberem und unterem, mit Dekor versehenem einzelblattförmigem Beschichtungsmaterial auf einer damit zu beschichtenden Trägerplatte zur Verfügung zu stellen, mit dem ein beidseitig deckungsgleiches bzw. lagerichtiges Positionieren von Dekoroberseite und Dekorunterseite unabhängig von den Kanten des Beschichtungsmaterials und damit ein gleichzeitig beidseitig dekorkonformes Prägen zwischen zwei dem Dekor angepassten oberflächenstrukturierten Pressblechen einer Beschichtungspresse erzielt werden kann.

Die Lösung dieser Aufgabe erfolgt in Verbindung mit den Oberbegriffen der Ansprüche 1 und 4 erfindungsgemäß durch die technischen Merkmale deren kennzeichnender Teile. Durch die Verwendung von zwei Kamerasystemen A und B können nicht nur die Lage des oberen und unteren Beschichtungsmaterials detektiert werden, sondern die jeweilige Istposition des unteren Dekors sehr genau erfasst werden und die des oberen Dekors exakt dazu hergestellt werden. Die über den angeschlossenen Rechner ermittelten Verstellungen werden mit Hilfe der Positioniereinrichtung während des Übersetzens des oberen Beschichtungsmaterials durchgeführt, wodurch eine vollständige und reproduzierbare Deckungsgenauigkeit der Dekore möglich wird, die dann auch mit der Lage der Pressbleche in der Presse vollständig übereinstimmt.

Besonders vorteilhaft kann die Position des unteren Beschichtungsmaterials auf der Legestraße anhand dessen Dekor und/ oder Druckmarkierungen von einem unterhalb der Legestraße angeordneten und nach oben gerichteten ersten Kamerasystem A detektiert werden und eine zum Dekor des unteren Beschichtungsmaterials lagerichtige Ablageposition des oberen Beschichtungsmaterial auf der Trägerplatte anhand dessen Dekor und/ oder Druckmarkierungen durch ein oberhalb der Legestraße angeordnetes Kamerasystem B. Zum exakten Legen des Beschichtungsmaterials werden also nicht dessen Folienkanten herangezogen, sondern das Dekor selber und/ oder zusätzliche auf dem Rand zwischen Dekor und Folienkante aufgebrachte Druckmarkierungen, so dass eine genaue Positionierung der Dekore zueinander erfolgen kann, was die Grundbedingungen für ein nachfolgendes dekorkonformes Prägen in einer Presse darstellt, welches vorteilhafterweise mit dem als vorbekannt beschriebenen Verfahren und der vorbekannten Vorrichtung durchgeführt werden kann.

Weitere vorteilhafte Verfahrensschritte und Vorrichtungsvarianten ergeben sich aus den nachfolgenden Unteransprüchen.

Vorteilhafterweise wird das obere Beschichtungsmaterial von einer Positioniervorrichtung mit Ziehleiste von dem Abnahmeplatz bis kurz vor seiner endgültigen Lage über die Trägerplatte gezogen, woraufhin das Kamerasystem B das Dekor über die Kameras detektiert und die Ziehleiste das Beschichtungsmaterial bis in die vom Rechner errechnete Ablageposition zieht und dort ablegt. Diese Vorgehensweise erlaubt es, dass das aufgrund seiner folienhaften Materialbeschaffenheit nur frei ziehbare Beschichtungsmaterial schnell und einfach in die gewünschte Position bewegt werden kann, ohne dass weitere Lagekorrekturen erforderlich wären.

Entsprechend einem weiteren vorteilhaften Verfahrensschritt werden die tatsächliche Breite und Länge des oberen Dekors des Beschichtungsmaterial bestimmt, ebenso wie unter Mithilfe des unteren Kamerasystems A die Breite und/ oder Länge des unteren Dekors, wobei dann eine Positionierung der beiden Beschichtungsmaterialien übereinander so erfolgen kann, dass bei unterschiedlicher Breite und/ oder Länge die tatsächlichen Mitten der Dekore in Längs- und Querrichtung übereinander positioniert werden können, so dass sich Differenzen nur von der Mitte zum Rand hin summieren, wodurch gegebenenfalls vorhandene Abweichungen weiter minimiert werden.

Gegebenenfalls ist auch eine Orientierung an den Rändern der Dekore denkbar, insbesondere bei identischen Chargen von Beschichtungsmaterial mit identischen Längen- und Breitenwachstum, welches stets beim Tränken des als Beschichtungsmaterials verwendeten Papieres mit einem Harz auftritt.

Nachfolgend wird die Vorrichtung zum exakten Legen von oberem und unterem Beschichtungsmaterial auf zu beschichtenden Trägerplatten anhand von Zeichnungen näher beschrieben. Es zeigen:
- Fig. 1: eine Prinzipdarstellung der Vorrichtung in einer Draufsicht,
- Fig. 2: eine skizzierte Seitenansicht eines Abschnittes der Legestraße,
- Fig. 3: eine skizzierte Draufsicht auf den Gegenstand der Fig. 2,
- Fig. 4: eine Skizze einer Seitenansicht einer Variante des Abschnittes der Legestraße gemäß Fig. 2, und
- Fig. 5: eine skizzierte Draufsicht auf den Gegenstand der Fig. 4.

Die Vorrichtung zum passgenau exakten Legen von oberem und unterem mit Dekor versehenden Beschichtungsmaterial übereinander besteht aus einer Legestraße 8 mit einem ersten Abnahmeplatz 5 von unterem Beschichtungsmaterial 1 und einer zeichnerisch nicht dargestellten Übergabevorrichtung auf die Legestraße 8, aus einem zweiten Abnahmeplatz 6 von Trägerplatten 4 mit einer ebenfalls zeichnerisch nicht dargestellten Übergabevorrichtung auf das auf der Legestraße 8 aufliegende untere Beschichtungsmaterial 1, und aus einem dritten Abnahmeplatz 7 für das obere Beschichtungsmaterial 2 mit einer ebenfalls nicht dargestellten Übergabevorrichtung des oberen Beschichtungsmaterials 2 auf die Trägerplatte 4, sowie aus einem ersten Kamerasystem A, welches unterhalb der Legestraße 8 angeordnet ist und dessen Kameras 9 oder Messfelder nach oben gerichtet sind, einem zweiten Kamerasystem B, dessen Kameras 10 von oben auf das obere Beschichtungsmaterial 2 gerichtet sind, sowie aus einem Kamerasystem C, dessen Kameras 11 auf die auf dem dritten Abnahmeplatz 7 aufliegenden Folien des oberen Beschichtungsmaterials 2 gerichtet sind. Ein viertes Kamerasystem D ist mit seinen Kameras 12 ebenfalls von oben auf den in der in Transportrichtung 17 nachfolgenden Presse 3 zu verpressenden Werkstückstapel mit den gegeneinander ausgerichteten Werkstückschichten gerichtet.

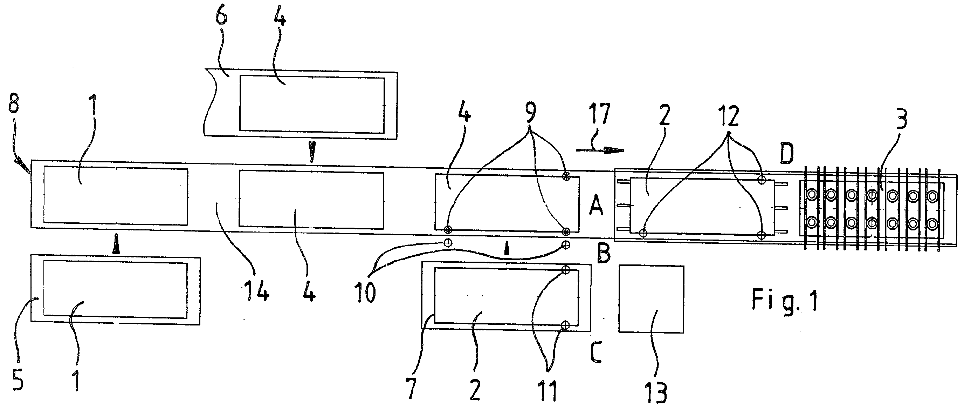

Der in Fig. 1 dargestellte Vorrichtungsaufbau zur Durchführung des Verfahrens muss allerdings nicht zwangsweise eine so lange Legestraße 8 aufweisen, die bei anderen denkbaren Ausführungsformen auch sehr stark gestaucht sein kann, da beispielsweise die Abnahmeplätze 5;6;7 in Transportrichtung 17 der Legestraße 8 nicht nur hintereinander, sondern sich auch beidseitig gegenüberliegend, parallel zueinander und/ oder übereinander angeordnet sein können.

Bei einer Variante der Vorrichtung kann zwischen den Abnahmeplätzen 5;7 für das Beschichtungsmaterial 1;2 und der Legestraße 8 ein Wender vorgesehen sein, wodurch unteres und oberes Beschichtungsmaterial 1;2 vom gleichen Abnahmeplatz 5;6 und damit vom gleichen Vorratsstapel der gleichen Charge abnehmbar sind, was nicht nur zu einer erheblichen Platzersparnis führt und nicht nur zu beidseitig dekorkonform geprägten Werkstücken, sondern auch zu beidseitig farbidentischen Werkstücken, wenn dies verlangt wird. Weiterhin wird die Qualität des Endproduktes dadurch verbessert, dass dann die erst nach ihrer Bedruckung mit einem Dekor in Harz getränkten Papiere mit einem dabei erfolgenden Längen- und Breitenwachstum von 0,1 -0,2% identische Längen- und Breitenmaßänderungen aufweisen, wodurch beim Übereinanderpositionieren der verwendeten Beschichtungsmaterialien 1;2 weniger Beachtung geschenkt werden muss, als wenn Beschichtungsmaterialien 1;2 unterschiedlicher Chargen mit unterschiedlichem Dehnungsverhalten verwandt werden.

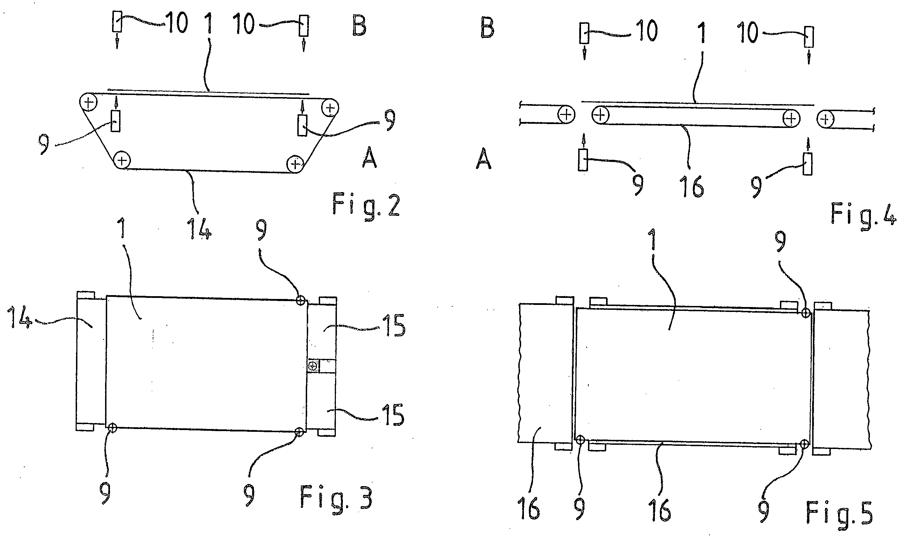

Das Kamerasystem A, welches mit seinen Kameras 9 unterhalb der Legestraße 8 angeordnet ist, kann, wie dies in der Fig. 3 dargestellt ist, mit seinen Kameras 9 auf über den Rand eines Transportbandes 14; 15 überstehendes Beschichtungsmaterial gerichtet sein, oder zwischen zwei schmaleren, voneinander beabstandeten Transportbändern 15, oder, wie dies aus den Fig. 4 und 5 hervorgeht, mit seinen Kameras 9 durch Zwischenräume zwischen den Transportbändern 16 auf das Beschichtungsmaterial 1 gerichtet sein.

Die von den Kameras 9;10;11;12 zu detektierenden Markierungen können aus den Rändern oder Ecken der Dekore bestehen oder aus auf den Rändern zwischen Dekor und den Außenkanten eines Beschichtungsmaterials 1;2 aufgedruckten bestehen, wobei diese randseitigen Markierungen sich bis zum Dekor erstrecken oder auch von diesem geringfügig beabstandet sein können.

## Patentansprüche

1. Verfahren zum exakten Legen und Verpressen von oberem und unterem mit Dekor versehenem einzelblattförmigem Beschichtungsmaterial (1;2) auf in einer Presse (3) mit dem Dekor angepassten oberflächenstrukturierten Pressblechen beidseitig druck- und prägekonform zu beschichtenden Trägerplatten (4), bei dem von einem ersten Abnahmeplatz (5) unteres Beschichtungsmaterial (1) auf eine Legestraße (8), auf dieses von einem zweiten Abnahmeplatz (6) eine Trägerplatte (4) und auf diese von einem Dritten Abnahmeplatz (7) oberes Beschichtungsmaterial (2) aufgelegt wird, **dadurch gekennzeichnet, dass** die Position des unteren Beschichtungsmaterials (2) auf der Legestraße (8) anhand dessen Dekor oder Druckmarkierungen von einem unterhalb der Legestraße (8) angeordneten und nach oben gerichteten ersten Kamerasystem A detektiert wird und eine zum Dekor des unteren Beschichtungsmaterials (2) lagerichtige Ablageposition des oberen Beschichtungsmaterials (1) auf der Trägerplatte (4) anhand dessen Dekor oder Druckmarkierungen von einem oberhalb der Legestraße (4) angeordneten zweiten Kamerasystems B mit Kameras (10) detektiert und von einem angeschlossenem Rechner (13) errechnet und das obere Beschichtungsmaterial (1) von einer Positioniervorrichtung dort lagerichtig zum unteren Beschichtungsmaterial (1) und anschließend verpresst wird.

2. Verfahren nach Anspruch 1, **dadurch gekennzeichnet, dass** die Positioniervorrichtung eine Ziehleiste für das obere Beschichtungsmaterial (2) aufweist, die dieses bis kurz vor seiner endgültigen Lage über die Trägerplatte (4) zieht, woraufhin das zweite Kamerasystem B über die Kameras (10) das Dekor oder die Markierungen detektiert und die Ziehleiste das Beschichtungsmaterial (2) bis in die vom Rechner (13) errechnete Ablageposition zieht und dort ablegt.

3. Verfahren nach einem der beiden vorgenannten Ansprüche, **dadurch gekennzeichnet, dass** unter Mithilfe von Kameras (11) eines dritten Kamerasystems C die Breite und/ oder Länge des oberen Beschichtungsmaterials (2) bestimmt wird und unter Mithilfe der Kameras (9) des ersten Kamerasystems A die Breite und oder Länge des unteren Beschichtungsmaterials (1) bestimmt wird und dass eine Positionierung der beiden Beschichtungsmaterialien (1;2) übereinander so erfolgt, dass bei unterschiedlicher Breite und/ oder Länge die tatsächlichen Mitten der Dekore in Längs- und Querrichtung übereinander positioniert werden.

4. Vorrichtung zum exakten Legen von oberem und unterem, mit Dekor versehenem, einzelblattförmigem Beschichtungsmaterial (1 ;2) auf in einer Presse (3) mit dem Dekor angepassten, strukturierten Pressblechen beidseitig druck- und prägekonform zu beschichtenden Trägerplatten (4), mit einem ersten Abnahmeplatz (5) unteren Beschichtungsmaterials (1) mit einer Übergabevorrichtung auf eine Legestraße (8), einem zweiten Ablageplatz (6) von Trägerplatten (4) mit einer Übergabevorrichtung auf das untere Beschichtungsmaterial (1) und einem dritten Abnahmeplatz (7) oberen Beschichtungsmaterials (2) mit einer Übergabevorrichtung auf die Trägerplatte (4) und mit mindestens zwei an einen Rechner (13) angeschlossenen Kamerasystemen A und B mit Messfeldern oder Kameras (9;10), **dadurch gekennzeichnet, dass** mindestens ein Kamerasystem A von unterhalb und mindestens ein Kamerasystem B von oberhalb der Legestraße (8) auf die Druckränder des Dekors und/ oder auf aufgedruckten Markierungen im Randbereich neben dem Dekor und/ oder andere wiederkehrende Druckmarkierungen der Beschichtungsmaterialien (1;2) gerichtet sind, wobei das erste Kamerasystem A auf über den Rand eines Transportbandes (14;15) vorstehendes oder in Zwischenräumen zwischen den Transportbändern (16) auf das Beschichtungsmaterial (1) gerichtet ist.

5. Vorrichtung nach Anspruch 4, **dadurch gekennzeichnet, dass** die Abnahmeplätze (5;6;7) in Transportrichtung (17) der Legestraße (8) hintereinander, sich beidseitig gegenüberliegend, parallel zueinander und/ oder übereinander angeordnet sind.

6. Vorrichtung nach einem der beiden vorgenannten Ansprüchen, **dadurch gekennzeichnet, dass** zwischen dem Abnahmeplatz (5;7) für das Beschichtungsmaterial (1;2) und der Legestraße (8) ein Wender vorgesehen ist, und unteres und oberes Beschichtungsmaterial (1;2) vom gleichen Abnahmeplatz (5;7) und dem gleichen Vorratsstapel abnehmbar ist.

## Claims

1. Method for the precise placement and pressing of upper and lower individual sheet coating material (1; 2) provided with decoration onto support plates (4) to be coated on both sides in a printing- and embossing-conformal manner in a press (3) with surface-structured press platens matched to the decoration, in which lower coating material (1) from a first removal location (5) is placed on a placement line (8), a support plate (4) from a second removal location (6) is placed on the former, and upper coating material (2) from a third removal location (7) is placed on these, **characterized in that** the position of the lower coating material (2) on the placement line (8) is detected by using its decoration or printed markings by a first camera system A arranged underneath the placement line (8) and aimed upwards, and a placement position of the upper coating material (1) on the carrier plate (4) in a correct position in relation to the decoration of the lower coating material (2) is detected by using its decoration or printed markings by a second camera system B with cameras (10) arranged above the placement line (4) and is calculated by a connected computer (13), and the upper coating material (1) is there in the correct position in relation to the lower coating material (1) by a positioning device and is then pressed.

2. Method according to Claim 1, **characterized in that** the positioning device has a pulling bar for the upper coating material (2), which pulls the latter over the support plate (4) until shortly before its final position, whereupon the second camera system B detects the decoration or the markings via the cameras (10) and the pulling bar pulls the coating material (2) as far as the placement position calculated by the computer (13) and places it there.

3. Method according to one of the two preceding claims, **characterized in that**, with the aid of cameras (11) of a third camera system C, the width and/or length of the upper coating material (2) is determined and, with the aid of the cameras (9) of the first camera system A, the width and/or length of the lower coating material (1) is determined, and **in that** positioning of the two coating materials (1; 2) above each other is carried out in such a way that, in the event of a different width and/or length, the actual centres of the decorations are positioned above each other in the longitudinal and transverse direction.

4. Device for the exact placement of upper and lower individual sheet coating material (1; 2) provided with decoration on support plates (4) to be coated on both sides in a printing- and embossing-conformal manner in a press (3) having structured press platens matched to the decoration, having a first removal location (5) of lower coating material (1) with a transfer device to a placement line (8), a second placement location (6) of support plates (4) with a transfer device onto the lower coating material (1), and a third removal location (7) of upper coating material (2) with a transfer device onto the support plate (4), and having at least two camera systems A and B with measuring areas or cameras (9; 10) connected to a computer (13), **characterized in that** at least one camera system A is aimed from underneath and at least one camera system B is aimed from above the placement line (8) at the printed edges of the decoration and/or at printed markings in the edge region beside the decoration and/or other repeating printing markings of the coating materials (1; 2), wherein the first camera system A is aimed at the coating material (1) projecting over the edge of the transport belt (14; 15) or into interspaces between the transport belts (16).

5. Device according to Claim 4, **characterized in that** the removal locations (5; 6; 7) are arranged one after another, opposite one another on both sides, parallel to one another and/or one above another in the transport direction (17) of the placement line (8).

6. Device according to one of the two preceding claims, **characterized in that** a turner is provided between the removal location (5; 7) for the coating material (1; 2) and the placement line (8), and upper and lower coating material (1; 2) can be removed from the same removal location (5; 7) and the same storage stack.

## Revendications

1. Procédé pour poser de manière précise et comprimer un matériau de revêtement (1; 2) en forme de feuille simple dotée d'un décor sur sa face supérieure et sur sa face inférieure sur des plaques de support (4) à revêtir sur leurs deux faces, par compression et gaufrage dans une presse (3) dotée de plaques de presse dont la surface est structurée de manière adaptée au décor, et dans lequel un matériau (1) de revêtement inférieur provenant d'un premier emplacement de prélèvement (5) est placé sur un parcours de pose (8), une plaque de support (4) provenant d'un deuxième emplacement de prélèvement (6) est placée et sur cette dernière un matériau (2) de revêtement supérieur provenant d'un emplacement de prélèvement (7) est placé, **caractérisé en ce que** la position du matériau (2) de revêtement inférieur sur le parcours de pose (8) est détectée à l'aide de son décor ou de repères de compression par un premier système de caméras A disposé en dessous du parcours de pose (8) et orienté vers le haut, **en ce que** la position de placement du matériau (1) de revêtement supérieur, correcte par rapport au décor du matériau (2) de revêtement inférieur sur la plaque de support (4) est détectée à l'aide de son décor ou de repères de compression par des caméras (10) d'un deuxième système de caméras B disposé au-dessus du parcours de pose (4) et est calculée par un calculateur (13) qui y est raccordé, et **en ce que** le matériau (1) de revêtement supérieur est par un ensemble de positionnement en position correcte par rapport au matériau (1) de revêtement inférieur avant d'être ensuite comprimé.

2. Procédé selon la revendication 1, **caractérisé en ce que** l'ensemble de positionnement présente une languette de traction pour le matériau (2) de revêtement supérieur qui tire ce dernier au-dessus de la plaque de support (4) peu avant sa position finale, suite à quoi le deuxième système de caméras B détecte le décor ou les repères par l'intermédiaire des caméras (10) et la languette de traction tire le matériau de revêtement (2) jusque dans la position de pose calculée par le calculateur (13) et le pose dans cette position.

3. Procédé selon l'une des deux revendications précédentes, **caractérisé en ce que** la largeur et/ou la longueur du matériau (2) de revêtement supérieur est déterminée à l'aide de caméras (11) d'un troisième système de caméras C, **en ce que** la largeur et/ou la longueur du matériau (1) de revêtement inférieur est déterminée à l'aide des caméras (9) du premier système de caméras A et **en ce qu'**un positionnement des deux matériaux de revêtement (1; 2) l'un au-dessus de l'autre s'effectue de telle sorte que si la largeur et/ou la longueur sont différentes, les milieux effectifs des décors sont positionnés l'un au-dessus de l'autre dans la direction longitudinale et dans la direction transversale.

4. Ensemble pour poser de manière précise et comprimer un matériau de revêtement (1; 2) en forme de feuille simple dotée d'un décor sur sa face supérieure et sur sa face inférieure sur des plaques de support (4) à revêtir sur leurs deux faces, par compression et gaufrage dans une presse (3) dotée de plaques de presse dont la surface est structurée de manière adaptée au décor, présentant un premier emplacement de prélèvement (5) d'un matériau (1) de revêtement inférieur à l'aide d'un ensemble de transfert sur un parcours de pose (8), un deuxième emplacement de pose (6) de plaques de support (4) à l'aide d'un ensemble de transfert sur le matériau (1) de revêtement inférieur et un troisième emplacement de prélèvement (7) de matériau (2) de revêtement supérieur à l'aide d'un ensemble de transfert sur la plaque de support (4), et au moins deux systèmes de caméra A et B raccordés à un calculateur (13) et présentant des champs de mesure ou des caméras (9; 10), **caractérisé en ce que** au moins un système de caméras A est orienté depuis le bas et au moins un système de caméras B est orienté depuis le haut du parcours de pose (8) sur les bords de compression du décor et/ou sur des repères imprimés dans la bordure à côté du décor et/ou d'autres repères répétés d'impression des matériaux de revêtement (1; 2), le premier système de caméras A étant orienté au-dessus du bord d'une bande transporteuse (14; 15) en débord ou dans les espaces intermédiaires entre les bandes transporteuses (16) sur le matériau de revêtement (1).

5. Ensemble selon la revendication 4, **caractérisé en ce que** les emplacements de prélèvement (5; 6; 7) sont disposés l'un derrière l'autre dans la direction de transport (17) du parcours de pose (8) et sont disposés les uns en face des autres des deux côtés, parallèlement les uns aux autres et/ou les uns au-dessus des autres.

6. Ensemble selon l'une des deux revendications précédentes, **caractérisé en ce qu'**un inverseur est prévu entre l'emplacement de prélèvement (5; 7) de matériau de revêtement (1; 2) et le parcours de pose (8) et **en ce que** les matériaux (1; 2) de revêtement inférieur et de revêtement supérieur peuvent être prélevés dans le même emplacement de prélèvement (5; 7) et de la même pile de réserve.
